# EUROPEAN PATENT SPECIFICATION

(11) **EP 2 818 663 B1**
(45) Date of publication and mention of the grant of the patent: **31.05.2017**
(21) Application number: 13191026.7
(22) Date of filing: 31.10.2013
(51) Int. Cl.: F01P 11/02

(54) **Saddle-type vehicle**
Motorrad
Véhicule à selle

(30) Priority: 28.06.2013 JP 2013136410
(43) Date of publication of application: 31.12.2014
(73) Proprietor: Yamaha Hatsudoki Kabushiki Kaisha, Iwata-shi, Shizuoka 438-8501 (JP)
(72) Inventor: Matsushita, Yasushi, Iwata-shi, Shizuoka 438-8501 (JP)
(74) Representative: Grünecker Patent- und Rechtsanwälte PartG mbB

(56) References cited:
- EP-A1- 1 905 975
- EP-A1- 2 014 890
- EP-A1- 2 573 353

## Description

The present invention relates to a saddle-type vehicle.

Conventionally, a saddle-type vehicle including a water pump for supplying cooling water, an internal combustion engine to be cooled by the cooling water, a radiator for cooling the cooling water, a bypass path bypassing the radiator, and a thermostat for selectively allowing/blocking the water flow from the radiator based on the temperature of the cooling water is known. Patent Document 1 describes a motorcycle including a radiator located to the right of a crankcase of an internal combustion engine, a water pump connected to a cylinder head of the internal combustion engine, a thermostat attached to a right portion of a cylinder block of the internal combustion engine, and a bypass pipe bypassing the radiator. This motorcycle includes an entrance pipe for connecting an exit of a cooling water path of the internal combustion engine and a top tank of the radiator to each other, and an exit pipe for connecting a bottom tank of the radiator and a suction port of the water pump to each other. The thermostat is provided in the exit pipe. An upstream end of the bypass pipe is connected to the entrance pipe, and a downstream end of the bypass pipe is connected to the thermostat.

In the above-described motorcycle, during a time period when the temperature of the internal combustion engine is low, for example, at the start of the motorcycle (hereinafter, referred to as a "cool period"), the flow of the cooling water from the radiator is blocked, and the cooling water flows in the bypass path. As a result, the cooling water does not radiate heat in the radiator, and therefore the temperature of the internal combustion engine is raised within a short time. After the temperature of the internal combustion engine is raised (hereinafter, during a time period when the temperature of the internal combustion engine is high will be referred to as a "warm period"), the thermostat is switched to permit the cooling water to flow from the radiator. Therefore, the cooling water flows in, and is cooled by, the radiator. Since the cooling water having a low temperature, which has been cooled by the radiator, is supplied to the internal combustion engine, the internal combustion engine is cooled.

However, the above-described motorcycle has a problem that air easily stays in the water pump. Patent Document 1 shows, in Figure 8, a structure including an air discharge pipe for discharging air staying in the water pump. An upstream end of the air discharge pipe is connected to a cover of the water pump. A downstream end of the air discharge pipe is connected to a connection portion where the entrance pipe and the internal combustion engine are connected. The air discharge pipe is structured to cause the air to flow together with the cooling water.

### Citation List

### Patent Literature

Patent document 1: Japanese Laid-Open Patent Publication No. 2008-95679
Patent document 2: European patent application EP2014890 A1 discloses a saddle-type vehicle according to the preamble of claim 1.

According to the conventional technology including the air discharge pipe, during the warm period, some of the cooling water cooled by the radiator flows into the entrance pipe via the air discharge pipe without flowing in the cooling water path of the internal combustion engine. The cooling water returns to the radiator without cooling the internal combustion engine. Therefore, the amount of the cooling water supplied to the cooling water path of the internal combustion engine is smaller than in a motorcycle not including the air discharge pipe. The conventional technology including the air discharge pipe has a problem that the cooling performance on the internal combustion engine is declined unless the radiator is made large-scaled.

The present invention made in light of the above-described point has an object of providing a saddle-type vehicle which is designed not to allow the air to easily stay in the water pump, so that the internal combustion engine can be warmed quickly in the cool period and can be sufficiently cooled in the warm period while a cooling mechanism including a water pump, a radiator and a pipe for connecting the water pump and the radiator is suppressed from being large-scaled.

According to the present invention said object is solved by a saddle-type vehicle having the features of independent claim 1. Preferred embodiments are laid down in the dependent claims.

A saddle-type vehicle, according to the present invention comprises a vehicle body frame; an internal combustion engine; a radiator; a pump; a first main path; a second main path; a bypass path; and a thermostat. The internal combustion engine includes a crankcase, a crankshaft located inside the crankcase, a cylinder section connected to a front portion of the crankcase and including a combustion chamber therein, a rotation shaft located inside the cylinder section and drivable by the crankshaft, and a cooling liquid path formed in the cylinder section, including an entrance and an exit, and having cooling liquid flow therethrough. The internal combustion engine is swingably supported by the vehicle body frame. The radiator includes a radiator main body that causes the cooling liquid to radiate heat, a top tank located above the radiator main body, and a bottom tank located below the radiator main body. The radiator is located to the right or to the left of the crankcase. The pump is attached to the cylinder section and drivable by the rotation shaft. The pump supplies the cooling liquid toward the entrance of the cooling liquid path. The first main path includes a first upstream end connected to the exit of the cooling liquid path and a first downstream end connected to the top tank of the radiator. The second main path includes a second upstream end connected to the bottom tank of the radiator and a second downstream end connected to the pump. The bypass path includes a third upstream end connected between the first upstream end and the first downstream end of the first main path and a third downstream end connected between the second upstream end and the second downstream end of the second main path. The thermostat is configured to permit the cooling liquid to flow in the bypass path when the cooling liquid has a temperature lower than a reference temperature, and to prevent the cooling liquid from flowing in the bypass path when the cooling liquid has a temperature equal to or higher than the reference temperature. A top end of an inner space of the thermostat is located at a position lower than a top end of an inner space of the top tank and higher than a top end of an inner space of the pump.

According to the saddle-type vehicle, when the temperature of the cooling liquid is lower than the reference temperature, the cooling liquid flows in the bypass path. Therefore, in the cool period, the internal combustion engine can be warmed quickly. The top end of the inner space of the thermostat is located at a position lower than the top end of the inner space of the top tank of the radiator and higher than the top end of the inner space of the pump. Therefore, even though the air discharge pipe is not provided, air hardly stays in the pump. It is not necessary to provide the air discharge pipe. Therefore, in the warm period, the cooling liquid does not flow in the air discharge pipe. In the warm period, none of the cooling liquid returns to the radiator without cooling the internal combustion engine. Thus, the internal combustion engine can be sufficiently cooled without making the radiator large-scaled. As described above, since the air is prevented from staying in the pump, the internal combustion engine can be warmed quickly in the cool period and can be sufficiently cooled in the warm period while a cooling mechanism including the pump, the radiator and the pipe for connecting the pump and the radiator is suppressed from being large-scaled.

According to an embodiment of the present invention, at least a portion of the bypass path is formed inside the thermostat.

According to the above-described embodiment, the thermostat forms at least a portion of the bypass path. Therefore, the cooling mechanism is suppressed from being large-scaled.

According to another embodiment of the present invention, at least a portion of the thermostat is provided in the first main path.

According to the above-described embodiment, the thermostat is located at a high position. Therefore, the height difference between the thermostat and the pump can be sufficiently large. This more effectively suppresses the air from staying in the pump.

According to still another embodiment of the present invention, thermostat includes a thermostat case including a first port, a second port, a third port and a fourth port, the first port being connected to the exit of the cooling liquid path of the internal combustion engine directly or indirectly; and a valve located inside the thermostat case, the valve causing the first port and the second port to communicate with each other when the temperature of the cooling liquid is lower than the reference temperature, and the valve causing the first port and the third port to communicate with each other and causing the second port and the fourth port to communicate with each other when the temperature of the cooling liquid is equal to or higher than the reference temperature. The saddle-type vehicle further comprises a first liquid pipe including an upstream end connected to the third port of the thermostat and a downstream end connected to the top tank of the radiator; a second liquid pipe including an upstream end connected to the second port of the thermostat and a downstream end connected to the pump; and a third liquid pipe including an upstream end connected to the bottom tank of the radiator and a downstream end connected to the fourth port of the thermostat.

According to the above-described embodiment, a portion between the first port and the second port of the thermostat forms the bypass path. It is not necessary to provide a liquid pipe for forming the bypass path separately from the thermostat. This can reduce the size of the entire path for the cooling liquid including the bypass path. Therefore, the air is prevented from staying in the pump. Thus, the internal combustion engine can be warmed quickly in the cool period and can be sufficiently cooled in the warm period while the cooling mechanism is suppressed from being large-scaled.

According to still another embodiment of the present invention, the valve is configured to cause the first port, the second port, and the third port to communicate with each other and to close the fourth port when the temperature of the cooling liquid is lower than the reference temperature.

According to the above-described embodiment, when the temperature of the cooling liquid is lower than the reference temperature, the first port, the second port and the third port communicate with each other, whereas the fourth port is closed. Therefore, the cooling liquid flows in the bypass path but does not flow in the radiator. The first port and the third port are always in communication with each other when the temperature of the cooling liquid is lower than the reference temperature and also when the temperature of the cooling liquid is equal to or higher than the reference temperature. Although the thermostat is provided between the exit of the cooling liquid path of the internal combustion engine and the top tank of the radiator, the exit of the cooling liquid path of the internal combustion engine and the top tank of the radiator are always in communication with each other without being blocked from each other by the valve of the thermostat. Therefore, the air contained in the cooling liquid easily flows into the top tank of the radiator, which suppresses the air from staying in the cooling liquid. The air is prevented from staying in the pump. Thus, the internal combustion engine can be warmed quickly in the cool period and can be sufficiently cooled in the warm period while the cooling mechanism is suppressed from being large-scaled.

According to still another embodiment of the present invention, a liquid injection opening is formed in the top tank of the radiator. As seen in a vehicle side view, the first liquid pipe extends in an obliquely downward direction from the downstream end of the first liquid pipe to the upstream end of the first liquid pipe. The second liquid pipe includes an inclining portion extending in an obliquely downward direction from the upstream end of the second liquid pipe as seen in a vehicle side view.

According to the above-described embodiment, the first liquid pipe and the inclining portion of the second liquid pipe form a liquid path which extends in an obliquely downward direction from the top tank of the radiator as seen in a vehicle side view. Therefore, when being injected from the liquid injection opening of the radiator, the cooling liquid easily and smoothly flows in the first liquid path, the thermostat, and the inclining portion of the second liquid path. This further suppresses the air from staying in the cooling liquid.

According to still another embodiment of the present invention, where either one of right and left is a first side and the other of right and left is a second side, the radiator is located on the first side with respect to the crankcase; the thermostat is located on the first side with respect to the cylinder section; the pump is located on the second side with respect to the cylinder section; and the inclining portion of the second liquid pipe is located on the first side with respect to the cylinder section.

According to the above-described embodiment, the thermostat and the inclining portion of the second liquid pipe are located on the first side with respect to the cylinder section, whereas the pump is located on the second side with respect to the cylinder section. Therefore, positions of the thermostat and the inclining portion of the second liquid pipe are hardly restricted by the position of the pump. The inclining portion of the second liquid pipe can have a sufficient length regardless of the position of the pump. This allows the air contained in the cooling liquid to be easily guided to the top tank of the radiator via the inclining portion of the second liquid pipe, and thus further suppresses the air from staying in the cooling liquid. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, the second liquid pipe includes a transverse portion extending from a position on the second side to a position on the first side below the cylinder section.

According to the above-described embodiment, the inclining portion of the second liquid pipe can have a sufficient length. This further suppresses the air from staying in the cooling liquid. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, where either one of right and left is a first side and the other of right and left is a second side, the thermostat is located on the first side with respect to the cylinder section; and the pump is located on the second side with respect to the cylinder section.

According to the above-described embodiment, positions of the thermostat and the liquid pipes in the vicinity of the thermostat are hardly restricted by the position of the pump. The thermostat and the liquid pipes in the vicinity of the thermostat can be easily located such that the air contained in the cooling liquid is easily guided to the top tank of the radiator regardless of the position of the pump. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, the cylinder section comprises a cylinder body including a cylinder formed therein, and a cylinder head connected to the cylinder body, the cylinder head defining the combustion chamber together with the cylinder. As seen in a vehicle side view, a bottom end of the top tank of the radiator is located at a position higher than a top end of the cylinder body.

According to the above-described embodiment, the position of the top tank of the radiator is high. Therefore, the air contained in the cooling liquid easily gathers in the top tank of the radiator. This further suppresses the air from staying in the cooling liquid. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, where either one of right and left is a first side and the other of right and left is a second side, the saddle-type vehicle further comprises a side stand that supports the vehicle body frame in a state of inclining with respect to a vertical line so as to extend further on the second side as being further upward; and the pump is attached to a portion on the second side of the cylinder section.

According to the above-described embodiment, when the vehicle body frame is supported by the side stand, the position of the pump is lowered. This allows the air contained in the cooling liquid in the pump to easily flow out. This further suppresses the air from staying in the cooling liquid. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, the top end of the inner space of the top tank is located at a position higher than the first downstream end of the first main path. The first downstream end of the first main path is located at a position higher than the first upstream end of the first main path.

According to the above-described embodiment, the air contained in the cooling liquid is easily guided to the top tank. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, the first main path includes a portion continuously extending upward from an upstream position toward a downstream position. At least a portion of the thermostat is provided in the portion of the first main path that continuously extends from the upstream position toward the downstream position.

According to the above-described embodiment, the air contained in the cooling liquid is easily guided to the top tank via the thermostat. Therefore, the air is prevented from staying in the pump, and thus the internal combustion engine can be warmed quickly in the cool period and can be sufficiently cooled in the warm period while the cooling mechanism is suppressed from being large-scaled.

According to still another embodiment of the present invention, the thermostat includes a portion of the first main path and a portion of the second main path. The portion of the first main path that is included in the thermostat is located at a position higher than the portion of the second main path that is included in the thermostat.

According to the above-described embodiment, the air contained in the cooling liquid in the second main path is easily guided to the top tank via the thermostat and the first main path. Therefore, the air is prevented from staying in the pump, and thus the internal combustion engine can be warmed quickly in the cool period and can be sufficiently cooled in the warm period while the cooling mechanism is suppressed from being large-scaled.

The present invention can provide a saddle-type vehicle which is designed not to allow the air to stay in the pump, so that the internal combustion engine can be warmed quickly in the cool period and can be sufficiently cooled in the warm period while a cooling mechanism including a pump, a radiator and a pipe for connecting the pump and the radiator is suppressed from being large-scaled.

### Brief Description of Drawings

FIG. 1 is a right side view of a motorcycle in an embodiment.
FIG. 2 is a cross-sectional view of a power unit taken along line II-II in FIG. 1.
FIG. 3 is a right side view of the power unit and a radiator.
FIG. 4 is a left side view of the power unit and the radiator.
FIG. 5 is a front view of the power unit and the radiator.
FIG. 6 is a plan view of a cylinder section and the radiator.
FIG. 7 is a front view of the power unit and the radiator when a vehicle body frame is supported by a side stand.
FIG. 8 is a water circuit diagram of a cooling device, which shows the circulation of cooling water in a cool period.
FIG. 9 is a water circuit diagram of the cooling device, which shows the circulation of the cooling water in a warm period.

### Description of Embodiments

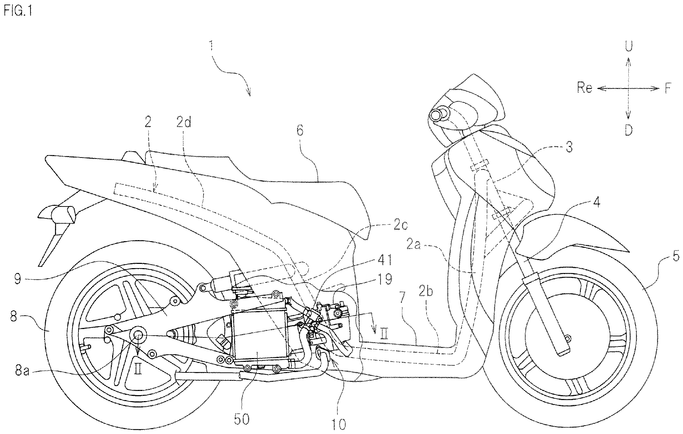

Hereinafter, a preferred embodiment of the present teaching will be described with reference to the drawings. As shown in FIG. 1, a saddle-type vehicle in this embodiment is a scooter-type motorcycle 1. However, the saddle-type vehicle is not limited to a scooter-type motorcycle. The "saddle-type vehicle" refers to a vehicle which a rider rides astride. The saddle-type vehicle may be another type of motorcycle, or a vehicle other than a motorcycle.

In the following description, unless otherwise specified, the terms "up", "down", "front", "rear", "left" and "right" respectively mean up, down, front, rear, left and right as seen from a rider of the motorcycle 1 sitting on a seat 6 described later. The motorcycle 1 may assume an inclining posture while running. The terms "up" and "down" respectively correspond to the vertically upward direction and the vertically downward direction when the motorcycle 1 is still on a horizontal surface. In the figures, U, D, F, Re, L and R respectively indicate up, down, front, rear, left and right.

The motorcycle 1 includes a vehicle body frame 2, a power unit 10 swingably supported by the vehicle body frame 2, the seat 6 on which a rider sits, and a low foot step 7 located forward to the seat 6. A head pipe 3 is provided at a front end of the vehicle body frame 2. A front fork 4 is rotatably supported by the head pipe 3. A front wheel 5 is supported by a bottom end of the front fork 4.

As seen in a vehicle side view, the vehicle body frame 2 includes a first frame 2a extending obliquely in a rearward and downward direction from the head pipe 3, a second frame 2b extending rearward from a bottom end of the first frame 2a, a third frame 2c extending obliquely in a rearward and upward direction from a rear end of the second frame 2b, and a fourth frame 2d extending obliquely in a rearward and upward direction from a rear end of the third frame 2c. A pair of, namely, left and right first frames 2a, a pair of, namely, left and right second frames 2b, a pair of, namely, left and right third frames 2c, and a pair of, namely, left and right fourth frames 2d are provided. The vehicle body frame 2 in this embodiment is merely an example, and the vehicle body frame according to the present invention is not limited to the vehicle body frame 2 in this embodiment, needless to say. As a vehicle body frame according to the present invention, a vehicle body frame having another shape and another structure may be used.

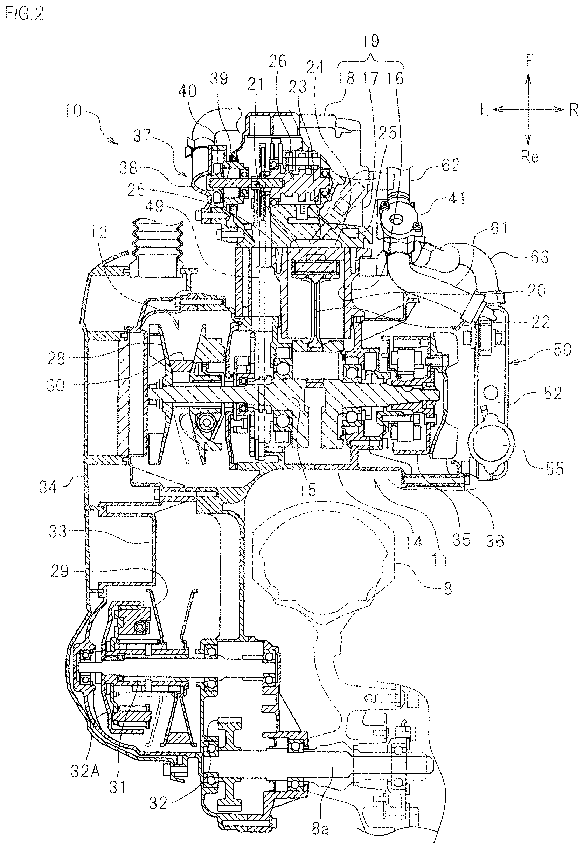

The power unit 10 is a so-called unit swing-type power unit, and is supported by the vehicle body frame 2 to be swingable upward and downward via a pivot shaft (not shown). A rear end of the power unit 10 is attached to a driving shaft 8a of a rear wheel 8 in a left portion of the motorcycle 1. As shown in FIG. 2, the power unit 10 includes a water-cooled internal combustion engine (hereinafter, referred to as an "engine") 11 and a V-belt type continuously variable transmission (hereinafter, referred to as the "CVT") 12. A driving force of the engine 11 is transmitted to the rear wheel 8 via the CVT 12. As shown in FIG. 1, in a right portion of the motorcycle 1, a rear end of a rear arm 9 is supported by the driving shaft 8a of the rear wheel 8. A front end of the rear arm 9 is attached to the power unit 10. Rightward with respect to the power unit 10, a radiator 50 is located.

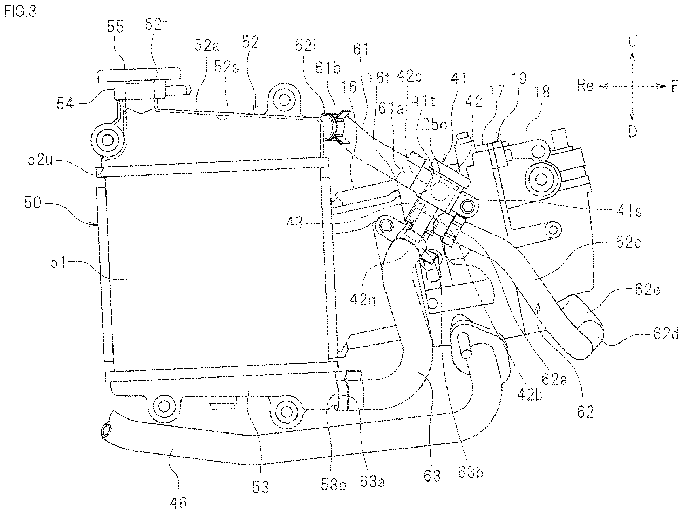

As shown in FIG. 2, the engine 11 includes a crankcase 14, a crankshaft 15 located inside the crankcase 14, a cylinder body 16 connected to a front portion of the crankcase 14, a cylinder head 17 connected to the cylinder body 16, and a head cover 18 connected to the cylinder head 17. The cylinder body 16, the cylinder head 17, and the head cover 18 form a cylinder section 19. As seen in a plan view, the cylinder section 19 extends forward from the crankcase 14. As shown in FIG. 3, as seen in a side view, the cylinder section 19 is inclined obliquely in a forward and upward direction. Alternatively, the cylinder section 19 may extend forward from the crankcase 14, parallel to a horizontal line as seen in a side view. In FIG. 3 through FIG. 6, the crankcase 14 is not shown.

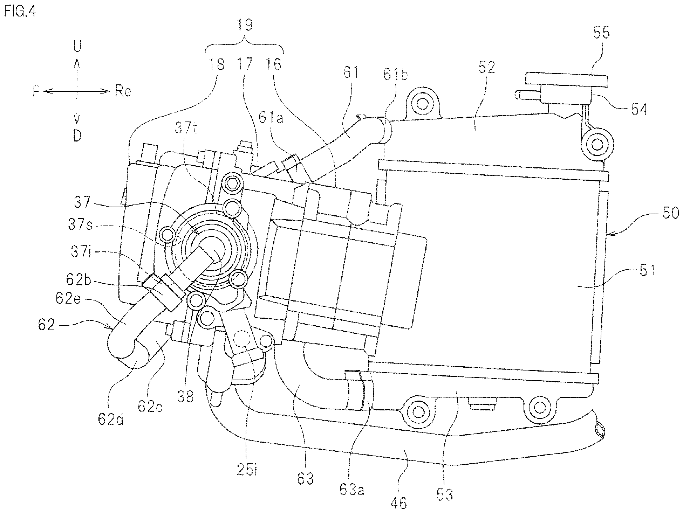

As shown in FIG. 2, a cylinder 20 is provided inside the cylinder body 16. A piston 21 is located in the cylinder 20. The piston 21 and the crankshaft 15 are coupled to each other via a connecting rod 22. In the cylinder section 19, a combustion chamber 24 is provided. The combustion chamber 24 is defined by a concaved portion 23 of the cylinder head 17, an inner circumferential surface of the cylinder 20, and a top face of the piston 21. Inside the cylinder section 19, a cooling water path 25 in which cooling water is to flow is formed. The cooling water path 25 is formed in the cylinder body 16 and the cylinder head 17. The cooling water path 25 has an entrance 25i (see FIG. 4) through which the cooling water flows into the engine 11 and an exit 25o (see FIG. 3) through which the cooling water flows out from the engine 11. The entrance 25i is formed in a left portion of the cylinder section 19, and the exit 25o is formed in a right portion of the cylinder section 19. In more detail, the entrance 25i is formed in a left portion of the cylinder head 17, and the exit 25o is formed in a right portion of the cylinder head 17. Inside the cylinder section 19, a cam shaft 26 is located. The cam shaft 26 is located inside the cylinder head 17 and the head cover 18. The cam shaft 26 is provided with a cam for driving an air intake valve and an air exhaust valve (not shown). The cam shaft 26 is coupled to the crankshaft 15 via a cam chain 49. The cam shaft 26 is an example of rotation shaft drivable by the crankshaft 15.

The CVT 12 is located to the left of the engine 11. The CVT 12 includes a driving pulley 28 attached to a left end of the crankshaft 15, a driven pulley 29 located rearward to the driving pulley 28, and a V-belt 30 wound on the driving pulley 28 and the driven pulley 29. The driven pulley 29 is supported by a shaft 31. Attached to the shaft 31 is a start clutch 32A for engaging the driven pulley 29 and the shaft 31 to each other when the rotation speed of the driven pulley 29 becomes equal to or higher than a reference rotation speed. The shaft 31 is coupled to the driving shaft 8a via a gear 32 and an additional gear (not shown). Leftward with respect to the crankcase 14, a transmission case 33 is located. The CVT 12 is located inside the transmission case 33. Leftward with respect to the transmission case 33, a cover 34 is located.

An electric generator 35 is attached to a right end of the crankshaft 15. At a right end of the crankshaft 15, a fan 36 for supplying air to the radiator 50 is fixed. The radiator 50 is located to the right of the crankcase 14, and the fan 36 is located to the left of the radiator 50. The fan 36 forms an air flow from a position to the right of the radiator 50 to a position to the left of the radiator 50.

The motorcycle 1 includes a water pump 37 for supplying the cooling water. The water pump 37 is attached to a left portion of the cylinder section 19. The water pump 37 includes a pump casing 38, a pump shaft 39 fixed to the cam shaft 26 so as to rotate together with the cam shaft 26, and an impeller 40 attached to the pump shaft 39. The pump shaft 39 and the impeller 40 are located in the pump casing 38. The water pump 37 is driven by the cam shaft 26. The water pump 37 supplies the cooling water toward the entrance 25i (see FIG. 4) of the cooling water path 25.

As shown in FIG. 3, the radiator 50 includes a radiator main body 51 for causing the cooling water to radiate heat, a top tank 52 located above the radiator main body 51, and a bottom tank 53 located below the radiator main body 51. Although not shown, a water path in which the cooling water flows is formed inside the radiator main body 51, and an air path in which air flows is formed outside the radiator main body 51. The radiator main body 51 is configured to allow the cooling water flowing in the water path and the air flowing in the air path to exchange heat each other. The top tank 52 and the bottom tank 53 are connected to the water path. A water injection opening 54 is provided at a rear end of the top tank 52. A lid 55 is detachably attached to the water injection opening 54. A top wall 52a of the top tank 52 is inclined obliquely in a rearward and upward direction. Therefore, the water injection opening 54 is located at the highest position of the top tank 52. In a front portion of the top tank 52, an inlet 52i through which the cooling water flows in is formed. In a front portion of the bottom tank 53, an outlet 53o through which the cooling water flows out is formed.

The motorcycle 1 includes a thermostat 41. The thermostat 41 includes a thermostat case 42 and a valve 43 provided inside the thermostat case 42.

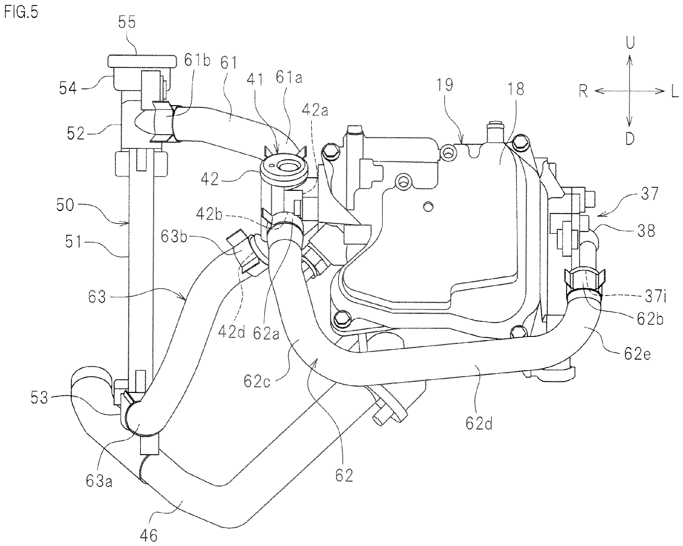

The thermostat case 42 has a first port 42a (see FIG. 5) opening leftward, a second port 42b opening obliquely in a forward and downward direction, a third port 42c opening obliquely in a rearward and upward direction, and a fourth port 42d opening obliquely in a rightward and downward direction. The directions of the first port 42a, the second port 42b, the third port 42c and the fourth port 42d are directions in a state where the thermostat 41 is attached to the power unit 10. In this embodiment, the thermostat case 42 is formed to be generally cylindrical, and is attached to the cylinder section 19 at a posture inclined with respect to a vertical line. The first port 42a, the second port 42b, the third port 42c and the fourth port 42d communicate with an inner space 41s of the thermostat case 42. Hereinafter, the inner space 41s of the thermostat case 42 will be simply referred to as the "inner space 41s of the thermostat 41". A top end 41t of the inner space 41s of the thermostat 41 is located at a position lower than a top end 52t of an inner space 52s of the top tank 52 of the radiator 50. The top end 41t of the inner space 41s of the thermostat 41 is located at a position higher than a top end 37t (see FIG. 4) of an inner space 37s of the water pump 37.

The valve 43 is structured to cover the fourth port 42d and to cause the first port 42a and the second port 42b to communicate with each other when the temperature of the cooling water is lower than a reference temperature. The valve 43 is structured to cause the first port 42a and the third port 42c to communicate with each other and to cause the second port 42b and the fourth port 42d to communicate with each other when the temperature of the cooling water is equal to or higher than the reference temperature. The value of the reference temperature is uniquely defined by the thermostat 41. However, the value of the reference temperature is not limited to any specific value. The reference temperature can be selectively set by replacing the thermostat 41.

The first port 42a of the thermostat case 42 is connected to the exit 25o of the cooling water path 25 of the engine 11. Herein, the first port 42a is directly connected to the exit 25o of the cooling water path 25. Alternatively, the first port 42a may be indirectly connected to the exit 25o of the cooling water path 25. The expression "indirectly connected" refers to that the first port 42a is connected to the exit 25o via another member such as a water pipe or the like. A water pipe may be provided between the first port 42a of the thermostat case 42 and the exit 25o of the cooling water path 25. The motorcycle I includes a first water pipe 61, a second water pipe 62 and a third water pipe 63 as water pipes in which the cooling water is to flow. In this specification, the "water pipe" encompasses both of a pipe having flexibility such as a rubber hose or the like and a pipe having no flexibility such as a metal pipe or the like. In this embodiment, the first water pipe 61, the second water pipe 62 and the third water pipe 63 are formed of flexible hoses. Alternatively, a portion of, or the entirety of, the first water pipe 61, the second water pipe 62 and the third water pipe 63 may be formed of a pipe having no flexibility.

An upstream end 61a of the first water pipe 61 is connected to the third port 42c of the thermostat case 42. A downstream end 61b of the first water pipe 61 is connected to the inlet 52i of the top tank 52 of the radiator 50. As seen in a vehicle side view, the first water pipe 61 extends obliquely in a forward and downward direction from the downstream end 61b to the upstream end 61a. As shown in FIG. 5, as seen in a vehicle front view, the first water pipe 61 extends obliquely in a rightward and downward direction (as seen from the rider of the motorcycle 1, obliquely in a leftward and downward direction) from the downstream end 61b to the upstream end 61a.

As shown in FIG. 5, an upstream end 62a of the second water pipe 62 is connected to the second port 42b of the thermostat case 42. A downstream end 62b of the second water pipe 62 is connected to a suction port 37i of the water pump 37. The second water pipe 62 includes a right inclining portion 62c, a transverse portion 62d, and a left inclining portion 62e. As shown in FIG. 3, the right inclining portion 62c is located to the right of the cylinder section 19, and extends obliquely in a forward and downward direction from the upstream end 62a as seen in a vehicle side view. As shown in FIG. 5, the transverse portion 62d extends from a position to the right of the cylinder section 19 to a position to the left of the cylinder section 19 below the cylinder section 19. As shown in FIG. 4, the left inclining portion 62e is located to the left of the cylinder section 19, and extends obliquely in a rearward and upward direction to the downstream end 62b as seen in a vehicle side view.

As shown in FIG. 3, an upstream end 63a of the third water pipe 63 is connected to the outlet 53o of the bottom tank 53 of the radiator 50. A downstream end 63b of the third water pipe 63 is connected to the fourth port 42d of the thermostat case 42. As seen in a vehicle side view, the third water pipe 63 once extends forward and then is curved to extend upward from the upstream end 63a to the downstream end 63b. As shown in FIG. 5, as seen in a vehicle front view, the third water pipe 63 extends obliquely in a rightward and upward direction from the upstream end 63a to the downstream end 63b.

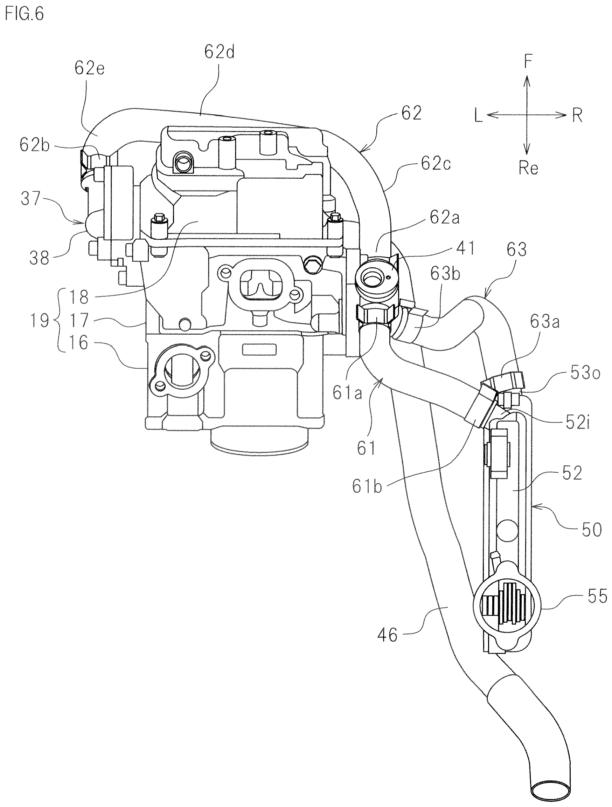

To a top portion of the cylinder head 17, an air intake pipe (not shown) is connected. To a bottom portion of the cylinder head 17, an air exhaust pipe 46 for discharging an exhaust gas from the engine 11 is connected. As shown in FIG. 3, as seen in a vehicle side view, the air exhaust pipe 46 is located below the bottom tank 53 of the radiator 50. As shown in FIG. 5, the air exhaust pipe 46 extends from a position to the left of the radiator 50 to a position to the right of the radiator 50 below the radiator 50. As shown in FIG. 6, as seen in a plan view, the air exhaust pipe 46 overlaps a rear end of the radiator 50.

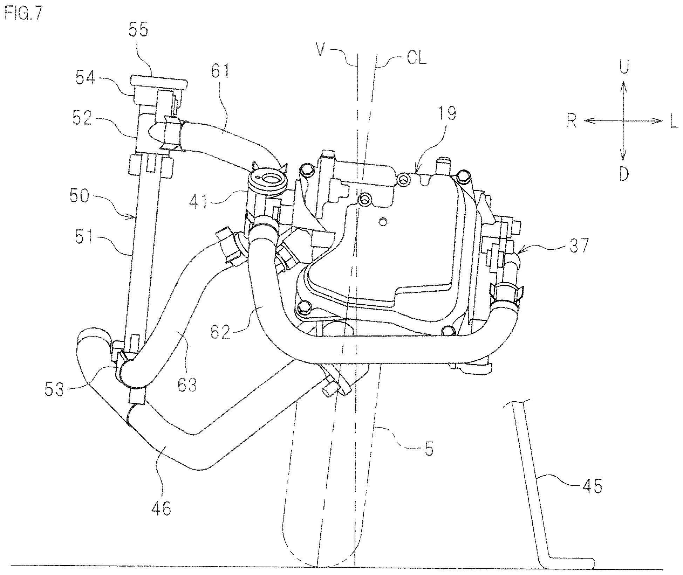

As shown in FIG. 7, the motorcycle I includes a side stand 45 for supporting the vehicle body frame 2 (see FIG. 1) in a state of inclining with respect to the vertical line V so as to extend further leftward as being further upward. The vehicle body frame 2 may be supported by the side stand 45 directly or indirectly via another member. The side stand 45 is located to the left of the vehicle body frame 2. Where the line passing the center in a width direction of the front wheel 5 and the rear wheel 8 is vehicle center line CL, when the vehicle body frame 2 is supported by the side stand 45, the vehicle center line CL is inclined with respect to the vertical line V so as to extend further leftward as being further upward. The water pump 37 is attached to the left portion of the cylinder section 19, and the radiator 50 is located to the right of the crankcase 14 (not shown in FIG. 7; see FIG. 2). Therefore, when the vehicle body frame 2 is supported by the side stand 45, the position of the water pump 37 is lower and the position of the top tank 52 of the radiator 50 is higher than when the motorcycle 1 is running straight on a horizontal plane. When the vehicle body frame 2 is supported by the side stand 45, the positions of the water pipes located to the right of the vehicle center line CL (in more detail, the first water pipe 61, a portion of the second water pipe 62 that is located to the right of the vehicle center line CL, and the third water pipe 63) are higher than when the motorcycle 1 is running straight on a horizontal plane.

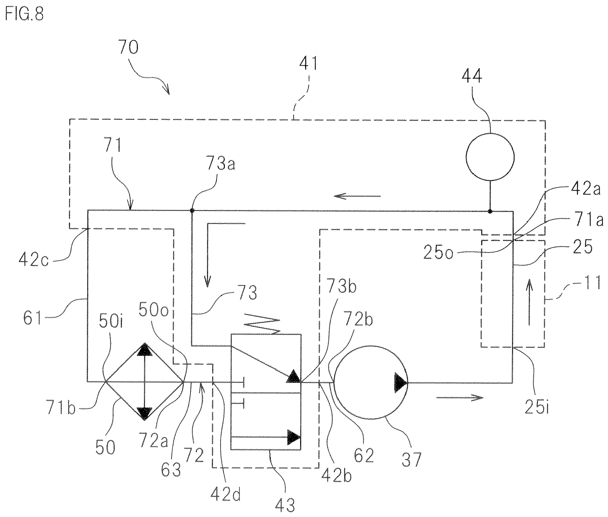

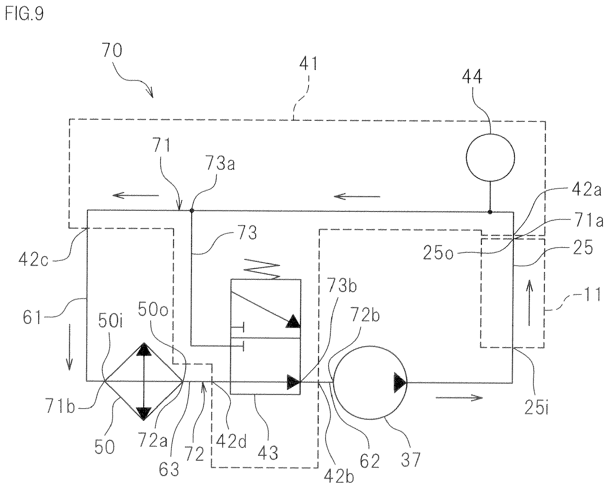

The water pump 37, the cooling water path 25 of the engine 11, the radiator 50, the thermostat 41, the first water pipe 61, the second water pipe, and the third water pipe 63 form a cooling device 70 for cooling the engine 11. Now, with reference to FIG. 8 and FIG. 9, a structure of a water circuit of the cooling device 70 will be described. FIG. 8 and FIG. 9 are each a water circuit diagram of the cooling device 70. FIG. 8 shows a flow of the cooling water in the cool period, and FIG. 9 shows a flow of the cooling water in the warm period.

As shown in FIG. 8, the cooling device 70 includes a first main path 71 having a first upstream end 71a connected to the exit 25o of the cooling water path 25 and a first downstream end 71b connected to an inlet 50i of the radiator 50, and a second main path 72 having a second upstream end 72a connected to the exit 50o of the radiator 50 and a second downstream end 72b connected to the water pump 37. The cooling device 70 also includes a bypass path 73 having a third upstream end 73a connected between the first upstream end 71a and the first downstream end 71b of the first main path 71 and a third downstream end 73b connected between the second upstream end 72a and the second downstream end 72b of the second main path 72. The first main path 71 includes a path between the first port 42a and the third port 42c of the thermostat case 42 and the first water pipe 61. The second main path 72 includes the third water pipe 63, a path between the fourth port 42d and the second port 42b of the thermostat case 42, and the second water pipe 62. The bypass path 73 includes a path between the first port 42a and the second port 42b of the thermostat case 42.

In this embodiment, the thermostat 41 includes a temperature sensitive body 44 such as wax or the like. However, there is no specific limitation on the structure of the thermostat 41, and the thermostat 41 may include a temperature sensor instead of the temperature sensitive body 44. The valve 43 acts in accordance with the temperature of the cooling water detected by the temperature sensitive body 44.

In the cool period, the temperature of the cooling water is lower than the reference temperature. Therefore, as shown in FIG. 8, the first port 42a and the second port 42b communicate with each other, and the fourth port 42d is closed. The cooling water is discharged from the water pump 37, flows in the cooling water path 25 of the engine 11, and then returns to the water pump 37 via the bypass path 73. The cooling water does not flow in the radiator 50. The cooling water warmed in the cooling water path 25 of the engine 11 is supplied to the cooling water path 25 again without being cooled by the radiator 50. Since the engine 11 is not excessively cooled by the cooling water, the temperature of the engine 11 is raised quickly.

When the engine 11 is warmed, the temperature of the cooling water is also raised. In the warm period, the temperature of the cooling water is equal to or higher than the reference temperature. Therefore, as shown in FIG. 9, the valve 43 is switched to cause the first port 42a and the third port 42c to communicate with each other and to cause the second port 42b and the fourth port 42d to communicate with each other. The cooling water is discharged from the water pump 37, flows in the cooling water path 25 of the engine 11, and then flows into the radiator 50. The cooling water warmed by the cooling water path 25 radiates heat in the radiator 50. As a result, the temperature of the cooling water is lowered. The cooling water having such a lowered temperature flows out of the radiator 50, returns to the water pump 37, and then is supplied to the cooling water path 25 again. Since the cooling water having a low temperature is supplied to the cooling water path 25, the engine 11 is cooled.

As described above, in the motorcycle I in this embodiment, in the cool period, the cooling water flows in the bypass path 73 and does not radiate heat in the radiator 50. In the cool period, the engine 11 is not excessively cooled by the cooling water. Therefore, the engine 11 can be warmed quickly in the cool period. In this embodiment, the cooling water does not flow in the radiator 50 in the cool period. Alternatively, the cooling device 70 may be structured such that in the cool period, some of the cooling water flows in the bypass path 73 and the rest of the cooling water flows in the radiator 50. In this case, some of the cooling water radiates heat in the radiator 50, and the engine 11 is slightly cooled by the cooling water. Even in this case, the engine 11 is less cooled by the cooling water than in the case where all the cooling water flows in the radiator 50 in the cool period. Therefore, the engine 11 can be warmed quickly.

According to this embodiment, the top end 41t of the inner space 41s of the thermostat 41 is located at a position which is lower than the top end 52t of the inner space 52s of the top tank 52 of the radiator 50 and is higher than the top end 37t of the inner space 37s of the water pump 37. Among the top tank 52 of the radiator 50, the thermostat 41, and the water pump 37, the position of the top tank 52 of the radiator 50 is highest, and the position of the water pump 37 is lowest. Therefore, even though an air discharge pipe, which is provided in the conventional art, is not provided, the air hardly stays in the water pump 37.

According to this embodiment, it is not necessary to provide the air discharge pipe. Therefore, in the warm period, none of the cooling water flows in the air discharge pipe, and all the cooling water flows in the cooling water path 25 of the engine 11. Thus, the engine 11 can be sufficiently cooled in the warm period with no need to make the radiator 50 large-scaled.

As shown in FIG. 8, in this embodiment, the bypass path 73 is formed inside the thermostat 41. No water pipe is needed to form the bypass path 73. Therefore, the size of the cooling device 70 can be reduced. Also, the number of components of the cooling device 70 can be decreased.

As shown in FIG. 8, at least a portion of the thermostat 41 is provided in the first main path 71. As shown in FIG. 3, the thermostat 41 is located at a sufficiently high position. Therefore, the height difference between the thermostat 41 and the water pump 37 can be sufficiently large. This more effectively suppresses air from staying in the water pump 37.

As shown in FIG. 8, the valve 43 of the thermostat 41 is structured to cause the first port 42a and the second port 42b to communicate with each other and to close the fourth port 42d when the temperature of the cooling water is lower than the reference temperature. As shown in FIG. 9, the valve 43 is structured to cause the first port 42a and the third port 42c to communicate with each other and to cause the second port 42b and the fourth port 42d to communicate with each other when the temperature of the cooling water is equal to or higher than the reference temperature. As can be seen, according to this embodiment, the first port 42a and the third port 42c of the thermostat 41 are always in communication with each other. The exit 25o of the cooling water path 25 of the engine 11 and the top tank 52 of the radiator 50 are always in communication with each other without being closed by the valve 43 of the thermostat 41. Air has a specific gravity smaller than that of water. Therefore, the air in the cooling water (namely, air bubbles) has a nature of receiving buoyancy and always attempting to rise. Since the exit 25o of the cooling water path 25 of the engine 11 and the top tank 52 of the radiator 50 are always in communication with each other, the air contained in the cooling water can be guided to the top tank 52 of the radiator 50. This effectively suppresses the air from staying in the cooling water.

As shown in FIG. 3, as seen in a vehicle side view, the first water pipe 61 extends in an obliquely downward direction from the downstream end 61b to the upstream end 61 a. The second water pipe 62 includes the right inclining portion 62c extending in an obliquely downward direction from the upstream end 62a as seen in a vehicle side view. Owing to this, as seen in a vehicle side view, a water path extending in an obliquely downward direction from the top tank 52 of the radiator 50 to the right inclining portion 62c via the thermostat 41 is formed. When being injected from the water injection opening 54 of the radiator, the cooling water easily and smoothly flows in the first water path 61, the thermostat 41, and the right inclining portion 62c of the second water path 62. Therefore, the air hardly stays in the thermostat 41. This further suppresses the air from staying in the cooling water.

According to this embodiment, the thermostat 41 is provided to the right of the cylinder section 19, and the water pump 37 is provided to the left of the cylinder section 19. Unlike in the case where both of the thermostat 41 and the water pump 37 are provided to the right or to the left of the cylinder section 19, the thermostat 41 and the water pipes in the vicinity of the thermostat 41 (i.e., the first water pipe 61, the inclining portion 62c of the second water pipe 62, and the third water pipe 63) are hardly restricted by the position of the water pump 37. Therefore, the thermostat 41 and the water pipes in the vicinity of the thermostat 41 can be easily located such that the air contained in the cooling water easily flows to the top tank 52 of the radiator 50 regardless of the position of the water pump 37.

Whereas the water pump 37 is located to the left of the cylinder section 19, the right inclining portion 62c of the second water pipe 62 is located to the right of the cylinder section 19. Therefore, the right inclining portion 62c of the second water pipe 62 can have a sufficient length regardless of the position, in the up-down direction, of the water pump 37. This allows the air contained in the cooling water to easily flow out to the top tank 52 of the radiator 50 via the right inclining portion 62c of the second water pipe 62, and thus effectively suppresses the air from staying in the cooling water.

As shown in FIG. 5, the second water pipe 62 includes the transverse portion 62d extending from a position to the right of the cylinder section 19 to a position to the left of the cylinder section 19 below the cylinder section 19. Unlike in the case where a water path extending from the top tank 52 of the radiator 50 to the water pump 37 above the cylinder section 19 is formed, the inclining portion 62c of the second water pipe 62 can have a sufficient length. This allows the air contained in the cooling water to be removed more easily.

As shown in FIG. 3, as seen in a vehicle side view, a bottom end 52u of the top tank 52 of the radiator 50 is located at a position higher than a top end 16t of the cylinder body 16. Since the position of the top tank 52 of the radiator 50 is high, the air contained in the cooling water easily flows out to the top tank 52 of the radiator 50. This more effectively suppresses the air from staying in the cooling water.

As shown in FIG. 7, when the vehicle body frame 2 is supported by the side stand 45, the position of the water pump 37 is lowered and the position of the top tank 52 of the radiator 50 is raised. Therefore, the air contained in the cooling water in the water pump 37 easily flows out toward the top tank 52 of the radiator 50. Thus, when the vehicle body frame 2 is supported by the side stand 45, the air contained in the cooling water is easily removed.

In this embodiment, the first port 42a of the thermostat 41 acts as the first upstream end 71a of the first main path 71. The downstream end 61b of the first water pipe 61 acts as the first downstream end 71b of the first main path 71. As shown in FIG. 3, the top end 52t of the inner space 52s of the top tank 52 is located at a position higher than the first downstream end 71b of the first main path 71. The first downstream end 71b of the first main path 71 is located at a position higher than the first upstream end 71a of the first main path 71. Owing to such a structure, the air contained in the cooling water can be easily guided to the top tank 52 of the radiator 50.

As shown in FIG. 3, the first main path 71 continuously extends upward from the first upstream end 71a toward the first downstream end 71 b. The first main path 71 includes a portion continuously extending upward from an upstream position toward a downstream position. The thermostat 41 is provided in the portion of the first main path 71 that continuously extends upward from the upstream position toward the downstream position. Owing to such a structure, the cooling water can be easily guided in the first main path 71 to the top tank 52. Even when air is contained in the cooling water at a position downward with respect to the thermostat 41, the air is easily guided to the top tank 52 via the thermostat.

As shown in FIG. 8, a portion between the first port 42a and the third port 42c of the thermostat 41 forms a portion of the first main path 71. A portion between the fourth port 42d and the second port 42b of the thermostat 41 forms a portion of the second main path 72. As can be seen, the thermostat 41 includes a portion of the first main path 71 and a portion of the second main path 72. As shown in FIG. 3, the portion of the first main path 71 that is included in the thermostat 41 is located at a position higher than the portion of the second main path 72 that is included in the thermostat 41. Owing to such a structure, the air contained in the cooling water in the second main path 72 can be easily guided to the top tank 52 via the thermostat 41 and the first main path 71.

So far, one embodiment of the present invention has been described. The above-described embodiment is merely an example, and the present invention can be carried out in various other forms. Now, other embodiments of the present invention will be briefly described.

In the above-described embodiment, the thermostat 41 is structured to close the fourth port 42d in the cool period so that the cooling water does not flow to the radiator 50. In other words, the flow of the cooling water from the radiator 50 is inhibited, so that the heat radiation from the cooling water in the radiator 50 is prevented. However, there is no specific limitation on the method for preventing heat radiation from the cooling water in the radiator 50. The thermostat 41 may be structured to cause the first port 42a and the second port 42b to communicate with each other and to close the third port 41c in the cool period. Since closing the third port 42c also can prevent the flow of the cooling water from the radiator 50, the heat radiation from the cooling water in the radiator 50 can be inhibited.

In the above-described embodiment, the thermostat 41 includes the first port 42a, the second port 42b, the third port 42c and the fourth port 42d, and the entirety of the bypass path 73 is formed inside the thermostat 41. Alternatively, the thermostat 41 may have three ports, and a portion of the bypass path 73 may be formed of a water pipe. For example, the cooling device 70 may include a first water pipe having an upstream end connected to the exit 25o of the cooling water path 25 of the engine 11 and a downstream end connected to the top tank 52 of the radiator 50, a bypass pipe having an upstream end connected to the first water pipe and a downstream end connected to the first port of the thermostat 41, a second water pipe having an upstream end connected to the second port of the thermostat 41 and a downstream end connected to the water pump 37, and a third water pipe having an upstream end connected to the bottom tank 53 of the radiator 50 and a downstream end connected to the third port of the thermostat 41. In this case, the thermostat 41 may be structured to cause the first port and the second port to communicate with each other when the temperature of the cooling water is lower than the reference temperature and to cause the second port and the third port to communicate with each other when the temperature of the cooling water is equal to or higher than the reference temperature.

Still alternatively, a thermostat having two ports, namely, a two-port thermostat 41 may be used. Namely, the cooling water device 70 may include a first water pipe having an upstream end connected to the exit 25o of the cooling water path 25 of the engine 11 and a downstream end connected to the top tank 52 of the radiator 50, a second water pipe having an upstream end connected to the bottom tank 53 of the radiator 50 and a downstream end connected to the water pump 37, and a bypass pipe having an upstream end connected to the first water pipe and a downstream end connected to the second water pipe; and a two-port thermostat 41 may be located in a portion of the first water pipe that is downstream with respect to the upstream end of the bypass pipe or a portion of the second water pipe that is upstream with respect to the downstream end of the bypass pipe.

In the above-described embodiment, the radiator 50 is located to the right of the crankcase 14, the thermostat 41 and the inclining portion 62c of the second water pipe 62 are located to the right of the cylinder section 19, and the water pump 37 is located to the left of the cylinder section 19. Where right is a first side and left is a second side, the radiator 50 is located on the first side with respect to the crankcase 14, the thermostat 41 and the inclining portion 62c of the second water pipe 62 are located on the first side with respect to the cylinder section 19, and the water pump 37 is located on the second side with respect to the cylinder section 19. Alternatively, the left/right relationship of the positions may be opposite to the above. Namely, the radiator 50 may be located to the left of the crankcase 14, the thermostat 41 and the inclining portion 62c of the second water pipe 62 may be located to the left of the cylinder section 19, and the water pump 37 may be located to the right of the cylinder section 19. In other words, where left is a first side and right is a second side, the radiator 50 may be located on the first side with respect to the crankcase 14, the thermostat 41 and the inclining portion 62c of the second water pipe 62 may be located on the first side with respect to the cylinder section 19, and the water pump 37 may be located on the second side with respect to the cylinder section 19. In the case where the radiator 50 is located to the left of the crankcase 14 and the water pump 37 is located to the right of the cylinder section 19, the side stand 45 may be located to the right of the vehicle body frame 2. Namely, in this case, the side stand 45 may be structured to support the vehicle body frame 2 in a state of inclining with respect to the vertical line so as to extend further rightward as being further upward.

It is not necessary that one of the radiator 50 and the water pump 37 is located to the right of the engine 11 and the other of the radiator 50 and the water pump 37 is located to the left of the engine 11. Both of the radiator 50 and the water pump 37 may be located to the right or to the left of the engine 11. Where right is a first side and left is a second side, the radiator 50 may be located on the first side with respect to the crankcase 14 and the water pump 37 may be located on the first side with respect to the cylinder section 19. Where left is a first side and right is a second side, the radiator 50 may be located on the first side with respect to the crankcase 14 and the water pump 37 may be located on the first side with respect to the cylinder section 19.

In the above-described embodiment, the cooling water is an example of cooling liquid. The water pipe is an example of liquid pipe in which a liquid flows. The water pump is an example of pump for supplying a liquid. The cooling liquid may be a liquid other than the cooling water.

### Reference Signs List

- 1: Motorcycle (saddle-type vehicle)
- 11: Internal combustion engine
- 14: Crankcase
- 15: Crankshaft
- 19: Cylinder section
- 25: Cooling water path (cooling liquid path)
- 26: Cam shaft (rotation shaft)
- 37: Water pump (pump)
- 41: Thermostat
- 61: First water pipe (first liquid pipe)
- 62: Second water pipe (second liquid pipe)
- 63: Third water pipe (third liquid pipe)

## Claims

1. A saddle-type vehicle, comprising:
a vehicle body frame (2);
an internal combustion engine (11) including a crankcase (14), a crankshaft (15) located inside the crankcase (14), a cylinder section (19) connected to a front portion of the crankcase (14) and including a combustion chamber (24) therein, a rotation shaft (26) located inside the cylinder section (19) and drivable by the crankshaft (15), and a cooling liquid path (25) formed in the cylinder section (19), including an entrance (25i) and an exit (25o), and having cooling liquid flow therethrough; the internal combustion engine (11) being swingably supported by the vehicle body frame (2);
a radiator (50) including a radiator main body (51) that causes the cooling liquid to radiate heat, a top tank (52) located above the radiator main body (51), and a bottom tank (53) located below the radiator main body (51); the radiator (50) being located to the right or to the left of the crankcase (14);
a pump (37) attached to the cylinder section (19) and drivable by the rotation shaft (26), the pump (37) supplying the cooling liquid toward the entrance (25i) of the cooling liquid path (25);
a first main path (71) including a first upstream end (71a) connected to the exit (25o) of the cooling liquid path (25) and a first downstream end (71 b) connected to the top tank (52) of the radiator (50);
a second main path (72) including a second upstream end (72a) connected to the bottom tank (53) of the radiator (50) and a second downstream end (72b) connected to the pump (37);
a bypass path (73) including a third upstream end (73a) connected between the first upstream end (71a) and the first downstream end (71b) of the first main path (71) and a third downstream end (73b) connected between the second upstream end (72a) and the second downstream end (72b) of the second main path (72); and
a thermostat (41) configured to permit the cooling liquid to flow in the bypass path (73) when the cooling liquid has a temperature lower than a reference temperature, and to prevent the cooling liquid from flowing in the bypass path (73) when the cooling liquid has a temperature equal to or higher than the reference temperature; **characterized in that** a top end (41t) of an inner space (41s) of the thermostat (41) is, when the vehicle is still on a horizontal surface, located at a position lower than a top end (52t) of an inner space (52s) of the top tank (52) and higher than a top end (37t) of an inner space (37s) of the pump (37), and
wherein at least a portion of the thermostat (41) is provided in the first main path (71).

2. A saddle-type vehicle according to claim 1, wherein at least a portion of the bypass path (73) is formed inside the thermostat (41).

3. A saddle-type vehicle according to claim 1 or 2, wherein:
the thermostat (41) includes:
a thermostat case (42) including a first port (42a), a second port (42b), a third port (42c) and a fourth port (42d), the first port (42a) being connected to the exit (25o) of the cooling liquid path (25) of the internal combustion engine (11) directly or indirectly; and
a valve (43) located inside the thermostat case (42), the valve (43) causing the first port (42a) and the second port (42b) to communicate with each other when the temperature of the cooling liquid is lower than the reference temperature, and the valve (43) causing the first port (42a) and the third port (42c) to communicate with each other and causing the second port (42b) and the fourth port (42d) to communicate with each other when the temperature of the cooling liquid is equal to or higher than the reference temperature; and
the saddle-type vehicle further comprises:
a first liquid pipe (61) including an upstream end (61a) connected to the third port (42c) of the thermostat (41) and a downstream end (61 b) connected to the top tank (52) of the radiator (50);
a second liquid pipe (62) including an upstream end (62a) connected to the second port (42b) of the thermostat (41) and a downstream end (62b) connected to the pump (37); and
a third liquid pipe (63) including an upstream end (63a) connected to the bottom tank (53) of the radiator (50) and a downstream end (63b) connected to the fourth port (42d) of the thermostat (41).

4. A saddle-type vehicle according to claim 3, wherein the valve (43) is configured to cause the first port (42a), the second port (42b), and the third port (42c) to communicate with each other and to close the fourth port (42d) when the temperature of the cooling liquid is lower than the reference temperature.

5. A saddle-type vehicle according to claim 3 or 4, wherein:
a liquid injection opening (54) is formed in the top tank (52) of the radiator (50);
as seen in a vehicle side view, the first liquid pipe (61) extends in an obliquely downward direction from the downstream end (61 b) of the first liquid pipe (61) to the upstream end (61a) of the first liquid pipe (61); and
the second liquid pipe (62) includes an inclining portion (62c) extending in an obliquely downward direction from the upstream end (62a) of the second liquid pipe (62) as seen in a vehicle side view.

6. A saddle-type vehicle according to claim 5, wherein:
where either one of right and left is a first side and the other of right and left is a second side,
the radiator (50) is located on the first side with respect to the crankcase (14);
the thermostat (41) is located on the first side with respect to the cylinder section (19);
the pump (37) is located on the second side with respect to the cylinder section (19); and
the inclining portion (62c) of the second liquid pipe (62) is located on the first side with respect to the cylinder section (19).

7. A saddle-type vehicle according to claim 6, wherein the second liquid pipe (62) includes a transverse portion (62d) extending from a position on the second side to a position on the first side below the cylinder section (19).

8. A saddle-type vehicle according to any one of claims 1 to 4, wherein:
where either one of right and left is a first side and the other of right and left is a second side,
the thermostat (41) is located on the first side with respect to the cylinder section (19); and
the pump (37) is located on the second side with respect to the cylinder section (19).

9. A saddle-type vehicle according to any one of claims 1 to 8, wherein:
the cylinder section (19) comprises a cylinder body (16) including a cylinder (20) formed therein, and a cylinder head (17) connected to the cylinder body (16), the cylinder head (17) defining the combustion chamber (24) together with the cylinder (20); and
as seen in a vehicle side view, a bottom end (52u) of the top tank (52) of the radiator (50) is located at a position higher than a top end (61t) of the cylinder body (16).

10. A saddle-type vehicle according to any one of claims 1 to 9, wherein:
where either one of right and left is a first side and the other of right and left is a second side,
the saddle-type vehicle (1) further comprises a side stand (45) that supports the vehicle body frame (2) in a state of inclining with respect to a vertical line so as to extend further on the second side as being further upward; and
the pump (37) is attached to a portion on the second side of the cylinder section (19).

11. A saddle-type vehicle according to any one of claims 1 to 10, wherein:
the top end (52t) of the inner space (52s) of the top tank (52) is located at a position higher than the first downstream end (71 b) of the first main path (71);
the first downstream end (71 b) of the first main path (71) is located at a position higher than the first upstream end (71a) of the first main path (71).

12. A saddle-type vehicle according to claim 11, wherein:
the first main path (71) includes a portion continuously extending upward from an upstream position toward a downstream position; and
at least a portion of the thermostat is provided in the portion of the first main path (71) that continuously extends from the upstream position toward the downstream position.

13. A saddle-type vehicle according to any one of claims 1 to 12, wherein:
the thermostat (41) includes a portion of the first main path (71) and a portion of the second main path (72); and
the portion of the first main path (71) that is included in the thermostat (41) is located at a position higher than the portion of the second main path (72) that is included in the thermostat (41).

## Patentansprüche

1. Spreizsitz-Fahrzeug, das umfasst:
einen Fahrzeugkarosserie-Rahmen (2);
einen Verbrennungsmotor (11), der ein Kurbelgehäuse (14), eine Kurbelwelle (15), die sich im Inneren des Kurbelgehäuses (14) befindet, einen Zylinder-Teilabschnitt (19), der mit einem vorderen Abschnitt des Kurbelgehäuses (14) verbunden ist und einen Brennraum (24) einschließt, eine Drehwelle (26), die sich im Inneren des Zylinder-Teilabschnitts (19) befindet und mit der Kurbelwelle (15) angetrieben werden kann, sowie einen Kühlflüssigkeits-Weg (25) enthält, der in dem Zylinder-Teilabschnitt (19) ausgebildet ist und einen Eingang (25i) sowie einen Ausgang (25o) einschließt und über den Kühlflüssigkeit strömt, wobei der Verbrennungsmotor (11) schwingend von dem Fahrzeugkarosserie-Rahmen (2) getragen wird;
einen Kühler (50), der einen Kühler-Hauptkörper (51), der bewirkt, dass die Kühlflüssigkeit Wärme abstrahlt, einen oberen Tank (52), der sich oberhalb des Kühler-Hauptkörpers (51) befindet, sowie einen unteren Tank (53) enthält, der sich unterhalb des Kühler-Hauptkörpers (51) befindet, wobei sich der Kühler (50) auf der rechten oder der linken Seite des Kurbelgehäuses (14) befindet;
eine Pumpe (37), die an dem Zylinder-Teilabschnitt (19) angebracht ist und von der Drehwelle (26) angetrieben werden kann, wobei die Pumpe (37) die Kühlflüssigkeit dem Eingang (25i) des Kühlflüssigkeits-Weges (25) zuleitet;
einen ersten Haupt-Weg (71), der ein erstes stromauf liegendes Ende (71 a), das mit dem Ausgang (25o) des Kühlflüssigkeits-Weges (25) verbunden ist, sowie ein erstes stromab liegendes Ende (71 b) enthält, das mit dem oberen Tank (52) des Kühlers (50) verbunden ist;
einen zweiten Haupt-Weg (72), der ein zweites stromauf liegendes Ende (72a), das mit dem unteren Tank (53) des Kühlers (50) verbunden ist, sowie ein zweites stromab liegendes Ende (72b) enthält, das mit der Pumpe (37) verbunden ist;
einen Umgehungs-Weg (73), der ein drittes stromauf liegendes Ende (73a), das mit dem ersten stromauf liegenden Ende (71 a) und dem ersten stromab liegenden Ende (71 b) des ersten Haupt-Weges (71) verbunden ist, sowie ein drittes stromab liegendes Ende (73b) enthält, das mit dem zweiten stromauf liegenden Ende (72a) und dem zweiten stromab liegenden Ende (72b) des zweiten Haupt-Weges (72) verbunden ist; und
einen Thermostat (41), der so ausgeführt ist, dass er zulässt, dass die Kühlflüssigkeit auf dem Umgehungs-Weg (73) strömt, wenn die Kühlflüssigkeit eine Temperatur unter einer Bezugs-Temperatur hat, und verhindert, dass die Kühlflüssigkeit auf dem Umgehungs-Weg (73) strömt, wenn die Kühlflüssigkeit eine Temperatur hat, die genauso hoch ist wie oder höher als die Bezugs-Temperatur;
**dadurch gekennzeichnet, dass** ein oberes Ende (41t) eines Innenraums (41s) des Thermostats (41), wenn sich das Fahrzeug noch auf einer horizontalen Fläche befindet, an einer Position angeordnet ist, die tiefer liegt als ein oberes Ende (52t) eines Innenraums (52s) des oberen Tanks (52) und höher liegt als ein oberes Ende (37t) eines Innenraums (37s) der Pumpe (37), und
wobei sich wenigstens ein Abschnitt des Thermostats (41) auf dem ersten Haupt-Weg (71) befindet.

2. Spreizsitz-Fahrzeug nach Anspruch 1, wobei wenigstens ein Abschnitt des Umgehungs-Weges (73) im Inneren des Thermostats (41) ausgebildet ist.

3. Spreizsitz-Fahrzeug nach Anspruch 1 oder 2, wobei:
der Thermostat (41) enthält:
ein Thermostat-Gehäuse (42), das einen ersten Anschluss (42a), einen zweiten Anschluss (42b), einen dritten Anschluss (42c) und einen vierten Anschluss (42d) enthält, wobei der erste Anschluss (42a) direkt oder indirekt mit dem Ausgang (25o) des Kühlflüssigkeits-Weges (25) des Verbrennungsmotors (11) verbunden ist; sowie
ein Ventil (43), das sich im Inneren des Thermostat-Gehäuses (42) befindet, wobei das Ventil (43) bewirkt, dass der erste Anschluss (42a) und der zweite Anschluss (42b) miteinander in Verbindung stehen, wenn die Temperatur der Kühlflüssigkeit niedriger ist als die Bezugstemperatur, und das Ventil (43) bewirkt, dass der erste Anschluss (42a) und der dritte Anschluss (42c) miteinander in Verbindung stehen, und bewirkt, dass der zweite Anschluss (42b) und der vierte Anschluss (42d) miteinander in Verbindung stehen, wenn die Temperatur der Kühlflüssigkeit genauso hoch ist wie oder höher als die Bezugs-Temperatur; und
das Spreizsitz-Fahrzeug des Weiteren umfasst:
eine erste Flüssigkeits-Leitung (61), die ein stromauf liegendes Ende (61 a), das mit dem dritten Anschluss (42c) des Thermostats (41) verbunden ist, sowie ein stromab liegendes Ende (61 b) enthält, das mit dem oberen Tank (52) des Kühlers (50) verbunden ist;
eine zweite Flüssigkeits-Leitung (62), die ein stromauf liegendes Ende (62a), das mit dem zweiten Anschluss (42b) des Thermostats (41) verbunden ist, sowie ein stromab liegendes Ende (62b) enthält, das mit der Pumpe (37) verbunden ist; und
eine dritte Flüssigkeits-Leitung (63), die ein stromauf liegendes Ende (63a), das mit dem unteren Tank (53) des Kühlers (50) verbunden ist, sowie ein stromab liegendes Ende (63b) enthält, das mit dem vierten Anschluss (42d) des Thermostats (41) verbunden ist.

4. Spreizsitz-Fahrzeug nach Anspruch 3, wobei das Ventil (43) so eingerichtet ist, dass es bewirkt, dass der erste Anschluss (42a), der zweite Anschluss (42b) und der dritte Anschluss (42c) miteinander in Verbindung stehen und es den vierten Anschluss (42d) schließt, wenn die Temperatur der Kühlflüssigkeit niedriger ist als die Bezugstemperatur.

5. Spreizsitz-Fahrzeug nach Anspruch 3 oder 4, wobei:
eine Flüssigkeitseinspritz-Öffnung (54) in dem oberen Tank (52) des Kühlers (50) ausgebildet ist;
die erste Flüssigkeits-Leitung (61), in einer Seitenansicht des Fahrzeugs gesehen, von dem stromab liegenden Ende (61 b) der ersten Flüssigkeits-Leitung (61) aus schräg nach unten zu dem stromauf liegenden Ende (61 a) der ersten Flüssigkeits-Leitung (61) verläuft; und
die zweite Flüssigkeits-Leitung (62) einen Neigungsabschnitt (62c) enthält, der, in einer Seitenansicht des Fahrzeugs gesehen, von dem stromauf liegenden Ende (62a) der zweiten Flüssigkeits-Leitung (62) aus schräg nach unten verläuft.

6. Spreizsitz-Fahrzeug nach Anspruch 5, wobei:
wenn entweder die rechte oder die linke Seite eine erste Seite ist und die andere von der rechten und der linken Seite eine zweite Seite ist,
der Kühler (50) sich an der ersten Seite in Bezug auf das Kurbelgehäuse (14) befindet;
der Thermostat (41) sich an der ersten Seite in Bezug auf den Zylinder-Teilabschnitt (19) befindet;
die Pumpe (37) sich an der zweiten Seite in Bezug auf den Zylinder-Teilabschnitt (19) befindet; und
der Neigungsabschnitt (62c) der zweiten Flüssigkeits-Leitung (62) sich an der ersten Seite in Bezug auf den Zylinder-Teilabschnitt (19) befindet.

7. Spreizsitz-Fahrzeug nach Anspruch 6, wobei die zweite Flüssigkeits-Leitung (62) einen Querabschnitt (62d) enthält, der sich von einer Position an der zweiten Seite zu einer Position an der ersten Seite unterhalb des Zylinder-Teilabschnitts (19) erstreckt.

8. Spreizsitz-Fahrzeug nach einem der Ansprüche 1 bis 4, wobei:
wenn entweder die rechte oder die linke Seite eine erste Seite ist und die andere von der rechten und der linken Seite eine zweite Seite ist,
der Thermostat (41) sich an der ersten Seite in Bezug auf den Zylinder-Teilabschnitt (19) befindet; und
die Pumpe (37) sich an der zweiten Seite in Bezug auf den Zylinder-Teilabschnitt (19) befindet.

9. Spreizsitz-Fahrzeug nach einem der Ansprüche 1 bis 8, wobei:
der Zylinder-Teilabschnitt (19) einen Zylinderkörper (16), der einen darin ausgebildeten Zylinder (20) enthält, sowie einen Zylinderkopf (17) umfasst, der mit dem Zylinderkörper (16) verbunden ist, wobei der Zylinderkopf (17) zusammen mit den Zylinder (20) den Brennraum (24) bildet; und
ein unteres Ende (52u) des oberen Tanks (52) des Kühlers (50) sich, in einer Seitenansicht des Fahrzeugs gesehen, an einer Position befindet, die höher liegt als ein oberes Ende (61t) des Zylinderkörpers (16).

10. Spreizsitz-Fahrzeug nach einem der Ansprüche 1 bis 9, wobei:
wenn entweder die rechte oder die linke Seite eine erste Seite ist und die andere von der rechten und der linken Seite eine zweite Seite ist,
das Spreizsitz-Fahrzeug (1) des Weiteren einen Seitenständer (45) umfasst, der den Fahrzeugkarosserie-Rahmen (2) in einem Zustand stützt, in dem er in Bezug auf eine vertikale Linie geneigt ist, so dass er sich weiter oben weiter zu der zweiten Seite erstreckt; und
die Pumpe (37) an einem Abschnitt an der zweiten Seite des Zylinder-Teilabschnitts (19) angebracht ist.

11. Spreizsitz-Fahrzeug nach einem der Ansprüche 1 bis 10, wobei:
das obere Ende (52t) des Innenraums (52s) des oberen Tanks (52) sich an einer Position befindet, die höher liegt als das erste stromab liegende Ende (71 b) des ersten Haupt-Weges (71);
das erste stromab liegende Ende (71 b) des ersten Haupt-Weges (71) sich an einer Position befindet, die höher liegt als das erste stromauf liegende Ende (71 a) des ersten Haupt-Weges (71).

12. Spreizsitz-Fahrzeug nach Anspruch 11, wobei:
der erste Haupt-Weg (71) einen Abschnitt enthält, der von einer stromauf liegenden Position auf eine stromab liegende Position zu kontinuierlich nach oben verläuft; und
wenigstens ein Abschnitt des Thermostats sich in dem Abschnitt des ersten Haupt-Weges (71) befindet, der kontinuierlich von der stromauf liegenden Position auf die stromab liegende Position zu verläuft.

13. Spreizsitz-Fahrzeug nach einem der Ansprüche 1 bis 12, wobei:
der Thermostat (41) einen Abschnitt des ersten Haupt-Weges (71) sowie einen Abschnitt des zweiten Haupt-Weges (72) einschließt; und
der Abschnitt des ersten Haupt-Weges (71), der in dem Thermostat (41) eingeschlossen ist, sich an einer Position befindet, die höher liegt als der Abschnitt des zweiten Haupt-Weges (72), der in dem Thermostat (41) eingeschlossen ist.

## Revendications

1. Véhicule de type à selle, comprenant :
un châssis (2) de carrosserie de véhicule ;
un moteur à combustion interne (11) incluant un carter (14), un vilebrequin (15) situé à l'intérieur du carter (14), une section à cylindres (19) reliée à une partie avant du carter (14) et dans laquelle se trouve une chambre de combustion (24), un arbre de rotation (26) situé à l'intérieur de la section à cylindres (19) et pouvant être entraîné par le vilebrequin (15), et un chemin pour liquide de refroidissement (25) formé dans la section à cylindres (19), comportant une entrée (25i) et une sortie (25o) et à travers lequel s'écoule un liquide de refroidissement ; le moteur à combustion interne (11) étant supporté par le châssis (2) de carrosserie de véhicule d'une manière permettant des oscillations ;
un radiateur (50) incluant un corps principal de radiateur (51) qui permet au liquide de refroidissement de rayonner de la chaleur, un réservoir supérieur (52) situé au-dessus du corps principal de radiateur (51) et un réservoir inférieur (53) situé sous le corps principal de radiateur (51) ; le radiateur (50) étant situé à droite ou à gauche du carter (14) ;
une pompe (37) fixée sur la section à cylindres (19) et pouvant être entraînée par l'arbre de rotation (26), la pompe (37) alimentant le liquide de refroidissement vers l'entrée (25i) du chemin pour liquide de refroidissement (25) ;
un premier chemin principal (71) comportant une première extrémité d'amont (71a) connectée à la sortie (25o) du chemin pour liquide de refroidissement (25) et une première extrémité d'aval (71 b) connectée au réservoir supérieur (52) du radiateur (50) ;
un second chemin principal (72) comportant une deuxième extrémité d'amont (72a) connectée au réservoir inférieur (53) du radiateur (50) et une deuxième extrémité d'aval (72b) connectée à la pompe (37) ;
un chemin de dérivation (73) comportant une troisième extrémité d'amont (73a) connectée entre la première extrémité d'amont (71a) et la première extrémité d'aval (71 b) du premier chemin principal (71) et une troisième extrémité d'aval (73b) connectée entre la deuxième extrémité d'amont (72a) et la deuxième extrémité d'aval (72b) du second chemin principal (72) ; et
un thermostat (41) configuré pour permettre au liquide de refroidissement de s'écouler dans le chemin de dérivation (73) lorsque le liquide de refroidissement a une température inférieure à une température de référence, et pour empêcher le liquide de refroidissement de s'écouler dans le chemin de dérivation (73) lorsque le liquide de refroidissement a une température égale ou supérieure à la température de référence ;
**caractérisé en ce qu'**une extrémité supérieure (41t) d'un espace intérieur (41s) du thermostat (41) se trouve, lorsque le véhicule est à l'arrêt sur une surface horizontale, dans une position plus basse qu'une extrémité supérieure (52t) d'un espace intérieur (52s) du réservoir supérieur (52) et plus haute qu'une extrémité supérieure (37t) d'un espace intérieur (37s) de la pompe (37), et
dans lequel au moins une partie du thermostat (41) est située dans le premier chemin principal (71).

2. Véhicule de type à selle selon la revendication 1, dans lequel au moins une partie du chemin de dérivation (73) est formée à l'intérieur du thermostat (41).

3. Véhicule de type à selle selon la revendication 1 ou 2, dans lequel :
le thermostat (41) inclut :
un boîtier de thermostat (42) incluant un premier orifice (42a), un deuxième orifice (42b), un troisième orifice (42c) et un quatrième orifice (42d), le premier orifice (42a) étant connecté à la sortie (25o) du chemin pour liquide de refroidissement (25) du moteur à combustion interne (11) de manière directe ou indirecte ;
une soupape (43) située à l'intérieur du boîtier de thermostat (42), la soupape (43) faisant communiquer le premier orifice (42a) et le deuxième orifice (42b) l'un avec l'autre lorsque la température du liquide de refroidissement est inférieure à la température de référence, et la soupape (43) faisant communiquer le premier orifice (42a) et le troisième orifice (42c) l'un avec l'autre et faisant communiquer le deuxième orifice (42b) et le quatrième orifice (42d) l'un avec l'autre lorsque la température du liquide refroidissement est égale ou supérieure à la température de référence ; et
le véhicule de type à selle comprend, en outre :
une première durite de liquide (61) comportant une extrémité d'amont (61 a) connectée au troisième orifice (42c) du thermostat (41) et une extrémité d'aval (61 b) connectée au réservoir supérieur (52) du radiateur (50) ;
une deuxième durite de liquide (62) comportant une extrémité d'amont (62a) connectée au deuxième orifice (42b) du thermostat (41) et une extrémité d'aval (62b) connectée à la pompe (37) ; et
une troisième durite de liquide (63) comportant une extrémité d'amont (63a) connectée au réservoir inférieur (53) du radiateur (50) et une extrémité d'aval (63b) connectée au quatrième orifice (42d) du thermostat (41).

4. Véhicule de type à selle selon la revendication 3, dans lequel la soupape (43) est configurée pour faire communiquer le premier orifice (42a), le deuxième orifice (42b) et le troisième orifice (42c) les uns avec les autres et pour fermer le quatrième orifice (42d) lorsque la température du liquide refroidissement est inférieure à la température de référence.

5. Véhicule de type à selle selon la revendication 3 ou 4, dans lequel :
une ouverture d'injection de liquide (54) est formée dans le réservoir supérieur (52) du radiateur (50) ;
en vue latérale du véhicule, la première durite de liquide (61) s'étend dans une direction oblique vers le bas, de l'extrémité d'aval (61 b) de la première durite de liquide (61) vers l'extrémité d'amont (61a) de la première durite de liquide (61) ; et
la deuxième durite de liquide (62) inclut une partie inclinée (62c) s'étendant dans une direction oblique vers le bas depuis l'extrémité d'amont (62a) de la deuxième durite de liquide (62), en vue latérale du véhicule.

6. Véhicule de type à selle selon la revendication 5, dans lequel :
l'un ou l'autre des côtés droit et gauche est un premier côté et l'autre des côtés droit et gauche est un second côté,
le radiateur (50) est situé sur le premier côté par rapport au carter (14) ;
le thermostat (41) est situé sur le premier côté par rapport à la section à cylindres (19) ;
la pompe (37) est située sur le second côté par rapport à la section à cylindres (19) ; et
la partie inclinée (62c) de la deuxième durite de liquide (62) est située sur le premier côté par rapport à la section à cylindres (19).

7. Véhicule de type à selle selon la revendication 6, dans lequel la deuxième durite de liquide (62) comporte une partie transversale (62d) s'étendant d'une position sur le second côté vers une position sur le premier côté sous la section à cylindres (19).

8. Véhicule de type à selle selon l'une quelconque des revendications 1 à 4, dans lequel :
l'un ou l'autre des côtés droit et gauche est un premier côté et l'autre des côtés droit et gauche est un second côté,
le thermostat (41) est situé sur le premier côté par rapport à la section à cylindres (19) ; et
la pompe (37) est située sur le second côté par rapport à la section à cylindres (19).

9. Véhicule de type à selle selon l'une quelconque des revendications 1 à 8, dans lequel :
la section à cylindres (19) comprend un corps de cylindre (16) dans lequel est formé un cylindre (20) et une culasse (17) connectée au corps de cylindre (16), la culasse (17) définissant la chambre de combustion (24) avec le cylindre (20) ; et
en vue latérale du véhicule, une extrémité inférieure (52u) du réservoir supérieur (52) du radiateur (50) se trouve dans une position plus haute qu'une extrémité supérieure (61t) du corps de cylindre (16).

10. Véhicule de type à selle selon l'une quelconque des revendications 1 à 9, dans lequel :
l'un ou l'autre des côtés droit et gauche est un premier côté et l'autre des côtés droit et gauche est un second côté,
le véhicule de type à selle (1) comprend, en outre, une béquille (45) qui supporte le châssis (2) de carrosserie de véhicule dans un état d'inclinaison par rapport à une ligne verticale de manière à s'étendre plus sur le second côté comme étant plus vers le haut ; et
la pompe (37) est fixée sur une partie sur le second côté de la section à cylindres (19).

11. Véhicule de type à selle selon l'une quelconque des revendications 1 à 10, dans lequel :
l'extrémité supérieure (52t) de l'espace intérieur (52s) du réservoir supérieur (52) se trouve dans une position plus haute que la première extrémité d'aval (71 b) du premier chemin principal (71) ;
la première extrémité d'aval (71b) du premier chemin principal (71) se trouve dans une position plus haute que la première extrémité d'amont (71 a) du premier chemin principal (71).

12. Véhicule de type à selle selon la revendication 11, dans lequel :
le premier chemin principal (71) comporte une partie s'étendant de manière continue vers le haut d'une position d'amont vers une position d'aval ; et
au moins une partie du thermostat est située dans la partie du premier chemin principal (71) qui s'étend de manière continue de la position d'amont vers la position d'aval.

13. Véhicule de type à selle selon l'une quelconque des revendications 1 à 12, dans lequel :
le thermostat (41) inclut une partie du premier chemin principal (71) et une partie du second chemin principal (72) ; et
la partie du premier chemin principal (71) qui est incluse dans le thermostat (41) se trouve dans une position plus haute que la partie du second chemin principal (72) qui est incluse dans le thermostat (41).
